# EUROPÄISCHE PATENTSCHRIFT

(11) **EP 1 123 577 B1**
(45) Veröffentlichungstag und Bekanntmachung des Hinweises auf die Patenterteilung: **25.01.2012**
(21) Anmeldenummer: 99952607.2
(22) Anmeldetag: 19.10.1999
(51) Int. Cl.: H02K 21/12, H02K 1/27, H02K 3/47, H02K 3/04, H02K 9/18, H02K 16/00, H02K 11/00, H02K 9/26

(54) **ELEKTRISCHE MASCHINE**
ELECTRIC MACHINE
MACHINE ELECTRIQUE

(30) Priorität: 21.10.1998 DE 19848503
(43) Veröffentlichungstag der Anmeldung: 16.08.2001
(73) Patentinhaber: Anwander, Werner, 87466 Oy-Mittelberg (DE)
(72) Erfinder: Anwander, Werner, 87466 Oy-Mittelberg (DE)
(74) Vertreter: Wieske, Thilo
(86) Internationale Anmeldenummer: PCT/EP1999/007919
(87) Internationale Veröffentlichungsnummer: WO 2000/024113

(56) Entgegenhaltungen:
- EP-A- 0 422 539
- EP-A- 0 422 539
- EP-A- 0 569 594
- WO-A-95/03646
- WO-A-96/38902
- DE-C1- 19 652 331
- FR-A- 2 536 222
- GB-A- 157 562
- GB-A- 190 907 203
- US-A- 4 363 984
- US-A- 5 289 066
- US-A- 5 460 503
- US-A- 5 481 151
- PATENT ABSTRACTS OF JAPAN Bd. 017, Nr. 494 (E-1428), 7. September 1993 (1993-09-07) & JP 05 122883 A (NEC GUMMA LTD), 18. Mai 1993 (1993-05-18)

## Beschreibung

Elektrische Maschine mit einem Rotor und einem Stator, in welchen elektrische Spulen bzw. Dauermagnete angeordnet sind, die sich bei der Drehbewegung des Rotors gegenseitig beeinflussen, wobei der Rotor die Magnete und der Stator die Spulen enthält und die Spulen ohne Eisenkern ausgebildet sind und sich wenigstens ein Abschnitt der Spulen quer über den Rotorumfang erstreckt.

Aus EP-B-0 422 539 ist bereits eine derartige Maschine bekannt.

Es ist aus der WO 95/03646 A1 weiterhin eine Ausführungsform bekannt, bei der darüber hinaus die Spulen einzeln in den Stator eingesetzt sind und derart abgebogen sind, daß sie sich an beiden Seiten des Rotors erstrecken und die im Rotor angeordneten Magnete weitgehend umfassen. Durch das Umfassen der Magnete durch die Einzel-Spulen wird ein sehr hoher Wirkungsgrad erreicht, wobei durch die Anordnung von Einzel-Spulen sowohl die Fertigung als auch die Wartung erheblich vereinfacht wurde.

Aus der EP 0 569 594 A1 ist es bekannt, auf der äußeren Umfangsfläche eines Rotors Magnete zu befestigen, indem diese mittels einer Schwalbenschwanzführung gehalten werden. Dabei werden die Magnete durch die Schwalbenschwanzführung gegen ein Abfallen vom Rotor gesichert.

Aus der WO 06/38902 A1 ist es bekannt, scheibenförmige Permanentmagnete auf einer Seitenfläche eines Rotors anzuordnen. Dabei sind Halteelemente vorhanden, die die Permanentmagnete gegen eine seitliche Verschiebung sichern. Diese Halteelemente bewirkten gleichzeitig eine Lenkung des Luftstrom bei der Drehung des Rotors, so dass die Magnete von der Luft umströmt werden. Dadurch wird eine Kühlung der Magnete erreicht.

Aufgabe der Erfindung ist es, diese Maschine weiter zu verbessern.

Diese Aufgabe wird erfindungsgemäß dadurch gelöst, daß die Dauermagnete über Tragelemente am Rotor befestigt sind, wobei die Tragelemente für die Magnete auswechselbar am Rotor befestigt sind.

Hiermit ist erreicht, daß die Magnete im Bedarfsfall leicht ausgewechselt werden können. Mit der Ausgestaltung nach Anspruch 1 ist es besonders cinfach, die Magnete aus der Maschine herauszunehmen und wieder einzusetzen.

Gemäß einer vorteilhaften Ausgestaltung der Erfindung gemäß Anspruch 2 ist vorgesehen, daß die Magnete zylinderförmig ausgebildet und wenigstens annähernd tangential am Rotorumfang angeordnet sind.

Durch diese Ausgestaltung ist eine einfache Anpassung der Magnete und der Spulen ermöglicht.

Sehr vorteilhaft ist es auch, wenn gemäß einer weiteren Ausgestaltung der Erfindung nach Anspruch 3 die Spulen im Querschnitt Ω-förmig ausgebildet sind und die Magnete bis unmittelbar an die Spuleninnenseite heranreichen.

Damit wird ein besonders hoher Wirkungsgrad der Maschine erreicht.

Es hat sich weiterhin eine Ausgestaltung gemäß Anspruch 4 als besonders vorteilhaft erwiesen, bei der zwischen den Tragelementen und dem Rotor vorzugsweise in radialer Richtung eine Verzahnung vorgesehen ist.

Hierdurch ist eine sichere Verbindung zwischen Tragelement und Rotor gegeben. Auftretende große Fliehkräfte werden wirkungsvoll kompensiert.

Weiterhin ist die Ausgestaltung nach Anspruch 5 sehr vorteilhaft, wenn die Tragelemente in axialer Richtung lösbar am Rotor befestigt sind.

Hiermit ist eine einfache Entnahme der Magnete aus dem Rotor sichergestellt.

Sehr vorteilhaft ist es auch, wenn gemäß einer weiteren Ausgestaltung der Erfindung nach Anspruch 6 die Anschlüsse der Spule einzeln am Stator zugänglich angeordnet sind.

Dadurch kann im Störungsfall jede einzelne Spule auf einfache Weise überprüft werden.

Als sehr vorteilhaft hat sich die Ausgestaltung nach Anspruch 7 ergeben, bei der die hintereinander liegenden Magnete jeweils mit unterschiedlicher Polung aufeinander folgen.

Hiermit wird eine besonders hohe Leistungsausbeute der Maschine erzielt.

Besonders günstig ist es auch, wenn gemäß einer weiteren Ausgestaltung der Erfindung nach Anspruch 8 in der Zuleitung zu den Spulen eine Umpoleinrichtung vorgesehen ist.

Hierdurch ist die elektrische Maschine einerseits in ihrer Anwendung als Motor vor der Umpoleinrichtung mit Gleichspannung und nach der Umpoleinrichtung mit Wechselspannung betreibbar und andererseits kann der elektrischen Maschine in ihrer Anwendung als Generator vor der Umpoleinrichtung Wechselspannung und nach der Umpoleinrichtung Gleichspannung abgegriffen werden.

Als sehr günstig hat es sich erwiesen, wenn gemäß einer Weiterbildung der Erfindung nach Anspruch 9 die Spule ringförmig ausgebildet ist und Rotor und Spule in ihrer Kontur aneinander angepaßt sind.

Eine weitere vorteilhafte Ausgestaltung der Erfindung nach Anspruch 10 ist dadurch gekennzeichnet, daß mehrere Rotoren und Spulen-Anordnungen in axialer Richtung der Maschine hintereinander angeordnet sind.

Ebenfalls sehr günstig ist es, wenn gemäß einer weiteren Ausgestaltung der Erfindung nach Anspruch 11 auf einer gemeinsamen Maschinenwelle hintereinander wenigstens zwei vorzugsweise als Motoren ausgebildete Maschinen angeordnet sind, die unterschiedliche Durchmesser aufweisen.

Aufgrund der unterschiedlichen Durchmesser weisen die Motoren unterschiedliche Drehmomente auf, was insbesondere beim Anlaufen der Maschine sehr vorteilhaft sein kann.

Weiterhin hat sich eine Ausführungsform nach Anspruch 12 als äußerst vorteilhaft erwiesen, wenn die Spulen aus mehreren, in ihrer Dicke nur jeweils eine Drahtlage aufweisenden Spulen gebildet werden.

Dadurch ist eine leichtere und paßgenauere Formgebung der Spulen möglich.

Dabei ist die Ausführungsform nach Anspruch 13 sehr vorteilhaft, bei der die Anschlüsse der einzelnen Spulen einzeln herausgeführt und insbesondere in Reihe und/oder parallel miteinander verschaltbar ausgebildet sind.

Als sehr vorteilhaft hat es sich auch gemäß Anspruch 14 erwiesen, wenn die einzelnen Spulenlagen insbesondere mit einem gut Wärme leitenden Klebstoff miteinander verklebt sind.

Durch diese Bauweise wird eine optimale Bauform der Spule und eine gute Wärmeableitung sichergestellt.

Gemäß einer weiteren Ausgestaltung der Erfindung nach Anspruch 15 ist es sehr vorteilhaft, wenn ein Kabelträger am Umfang der Rotor-Stator-Anordnung vorgesehen ist.

Hiermit ist eine saubere und einfache Kabelführung zwischen den Spulen und nach Außen sichergestellt.

Weitere mögliche Ausgestaltungen sollen nachfolgend noch erläutert werden.

An der Außenseite des Stators kann eine Abschirmung vorgesehen sein, die insbesondere eine magnetische Abschirmung bewirkt.

Diese Abschirmung kann aus Draht, insbesondere mehreren Weicheisendrähten gebildet sein. Dabei können die Abschirmungsdrähte in konzentrischen Kreisen um die Achse der Maschine angeordnet sein.

Die Abschirmung kann auch als Blech, insbesondere Weicheisenblech ausgeführt sein.

Durch die Abschirmung des Stators gegen nach außen wirkende magnetische und elektrische Felder wird die Beeinflussung von anderen Maschinen im Umfeld erheblich reduziert.

Es kann weiterhin ein Gehäuse vorgesehen sein, welches die gesamte Rotor-Stator-Anordnung umschließt. Hierdurch wird einerseits ein Berührungsschutz ausgebildet und andererseits wirkungsvoll Schmutz und dgl. von der elektrischen Maschine ferngehalten.

Das Gehäuse kann wenigstens eine Lufteintrittsöffnung in der unmittelbaren Nähe der Achse der Maschine aufweisen.

Das Gehäuse kann weiterhin wenigstens eine Luftaustrittsöffnung wenigstens in der Nähe des größten Umfangs aufweisen.

Die durch die Lufteintrittsöffnung angesaugte Luft wird durch die Drehbewegung des Rotors in Richtung größtem Rotorumfang beschleunigt und verläßt das Gehäuse durch die Luftaustrittsöffnung. Die Maschine wird dadurch wirkungsvoll gekühlt. Eine optimale Umströmung der Spulen ist dadurch sichergestellt.

Dabei kann der Luftaustritt über einen zwischengeschalteten Wärmetauscher mit dem Lufteintritt verbunden sein.

Hiermit besteht eine sinnvolle Möglichkeit, die Abwärme der Maschine abzuführen und eventuell einer weiteren Nutzung zuzuführen.

Dabei kann der Wärmetauscher die Wärme der Maschine an ein gasförmiges oder flüssiges Medium übertragen.

Der Wärmetauscher kann die Wärme der Maschine auch an ein festes Medium übertragen. Dabei kann der Wärmetauscher insbesondere als Erdwärmetauscher ausgebildet sein.

Ebenso kann am Lufteintritt ein Partikelfilter vorgesehen sein.

Dadurch werden für die Maschine schädliche Partikel vom Inneren des Gehäuses ferngehalten.

Der Partikelfilter kann dabei wenigstens ein metallisches Feinsieb aufweisen.

Hierdurch ist gewährleistet, daß das Feinsieb auch bei starker Verschmutzung gereinigt und wiederverwendet werden kann.

Weiterhin kann ein Magnet, insbesondere ein Permanentmagnet, mit einem Pol am Feinsieb angeordnet sein.

Damit werden magnetisch beeinflussbare Teilchen, welche die Maschine am stärksten beeinflussen könnten, wirksam zurückgehalten.

Dabei kann ein zweites Feinsieb mit dem zweiten Pol des Magneten in Verbindung gebracht sein.

Trotzdem durch das erste Feinsieb hindurchtretende magnetisch beeinflussbare Teilchen werden dadurch vom zweiten Feinsieb zurückgehalten.

Die Feinsiebe können vom Magneten trennbar ausgebildet sein.

Die zurückgehaltenen Teilchen sind nach Trennung vom Magneten besonders leicht von dem/den Feinsieb/-en zu entfernen.

Außerdem kann noch ein Filter vorgesehen sein, der elektrisch und/oder magnetisch beeinflussbare Teilchen aus dem Luftstrom auszufiltern vermag.

Hierdurch werden ebenfalls die Maschine negativ beeinflussende elektrisch geladene Teilchen vom Inneren des Gehäuses ferngehalten.

Das Gehäuse kann weiterhin eine Ausgestaltung aufweisen, die einen guten Wärmeübergang zwischen Gehäuse und Umgebung sicherstellt.

Dadurch kann die Maschine auch voll gekapselt betrieben werden, ohne daß eine Überhitzung befürchtet werden muß.

In der Zeichnung ist die Erfindung anband von mehreren Ausführungsbeispielen veranschaulicht. Dabei zeigen:
- Fig. 1:: einen Querschnitt durch eine Maschine mit zylinderförmigen Magneten und Ω-förmigen Spulen,
- Fig. 2:: eine Seitenansicht der Maschine mit Blick auf den Stator,
- Fig. 3:: eine Seitenansicht des Rotors mit herausnehmbar angeordneten Dauermagneten;
- Fig. 4:: eine Seitenansicht einer teilweise zerlegten Maschine,
- Fig. 5:: einen Querschnitt durch eine weitere Maschine,
- Fig. 6:: eine Seitenansicht der Maschine nach Fig. 5,
- Fig. 7:: eine Seitenansicht eines mit dem Rotor verzahnten Magneten,
- Fig. 8:: eine tangentiale Ansicht des Rotors mit demselben verzahnten Magneten,
- Fig. 9:: eine teilweise Seitenansicht eines Stators, der auf der Außenseite mit konzentrischen Ringen aus Draht belegt ist,
- Fig.10:: einen Querschnitt durch eine weitere Maschine, die einerseits Drahtringe wie in Fig. 9 aufweist und bei der oberhalb des Stators ein Kabelträger angeordnet ist.
- Fig. 11:: eine Ansicht einer in einem Gehäuse eingebetteten Maschine mit einem Wärmetauscher zum Abführen der Abwärme der Maschine,

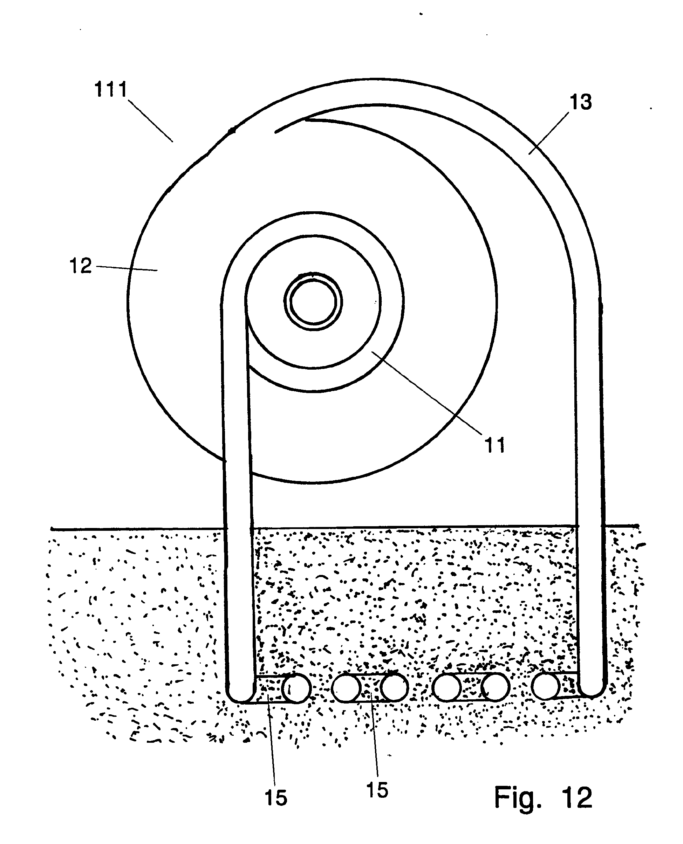

- Fig. 12:: eine Ansicht einer weiteren in einem Gehäuse eingebetteten Maschine mit einem Erdwärmetauseher zum Abführen der Abwärme der Maschine,

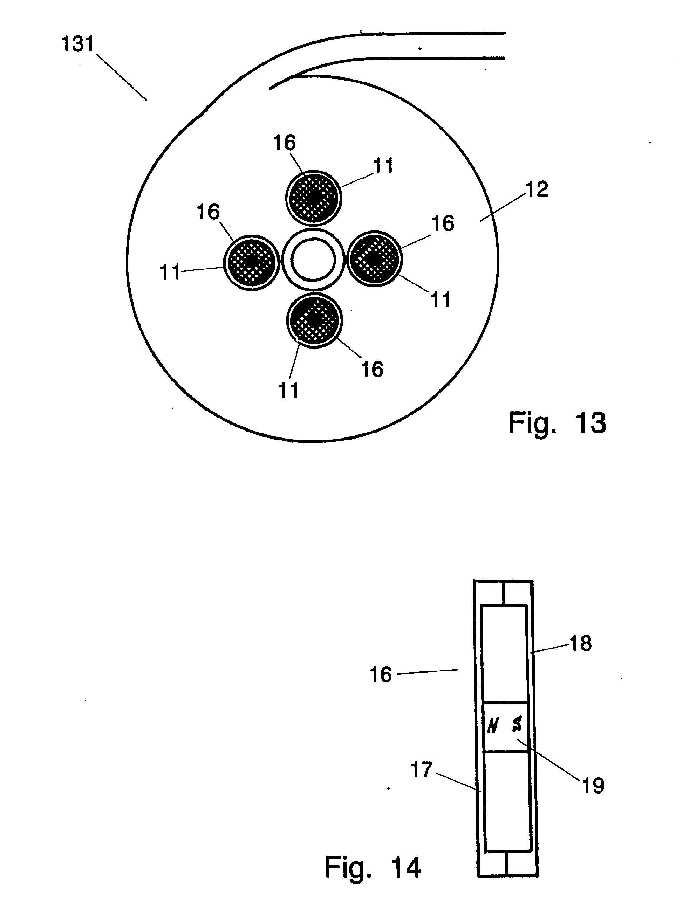

- Fig. 13:: eine Ansicht einer weiteren in einem Gehäuse eingebetteten Maschine, mit durch Filter geschützten Luftzufuhröffnungen und einer Abluftableitung und
- Fig. 14:: einen Querschnitt durch eine Filteranordnung mit zwei Feinsieben und einem Permanentmagnet.

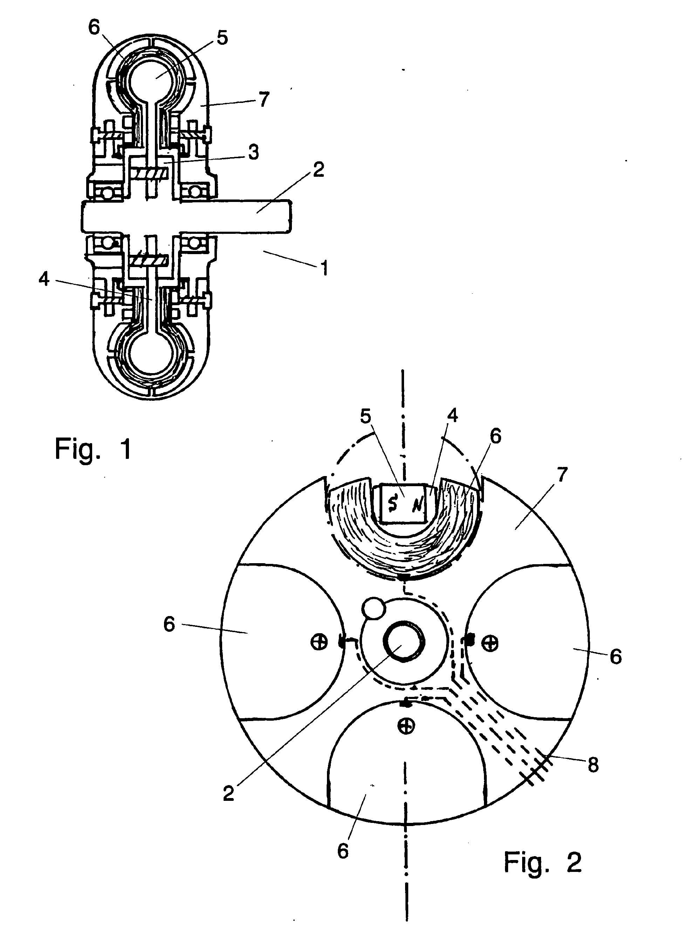

Mit 1 ist in Fig. 1 eine Maschine bezeichnet, die wahlweise als Motor oder als Generator eingesetzt werden kann. An einer Welle 2 ist ein Rotor 3 angeordnet, an welchem Tragelemente 4 befestigt sind. Am äußeren Ende dieser Tragelemente 4 sitzen zylinderförmige Dauermagnete 5. Diese Dauermagnete 5 sind unter Belassung eines kleinen Luftspaltes von Ω-förmigen Spulen 6 umgeben, die ihrerseits im Statorteil 7 festgelegt sind.

In Fig. 2 ist der Stator 7 in einer Seitenansicht dargestellt, wobei vier Spulen 6 vorgesehen sind. Die Anschlussleitungen 8 der Spulen 6 sind nach außen herausgelegt, so daß die Spulen 6 im Störungsfall ohne Demontage überprüft werden können.

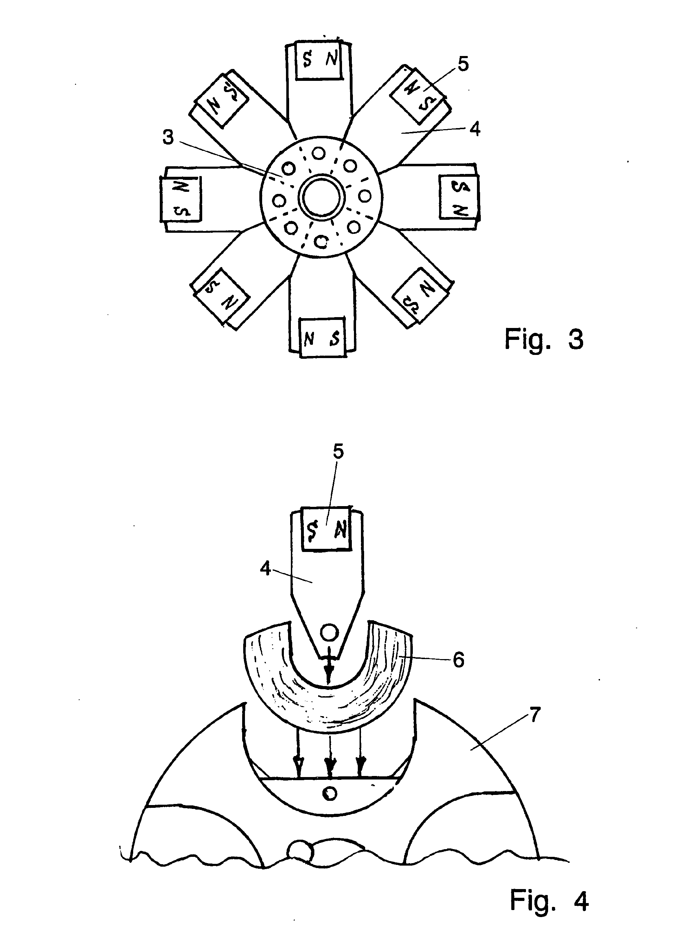

Wie in den beiden Figuren 3 und 4 dargestellt ist, sind sowohl die Dauermagnete 5 zusammen mit ihren Tragelementen 4 als auch die Spulen leicht demontierbar und ebenso leicht wieder einsetzbar. Im Reparaturfall muß daher jeweils nur das betroffene Teil ausgewechselt werden.

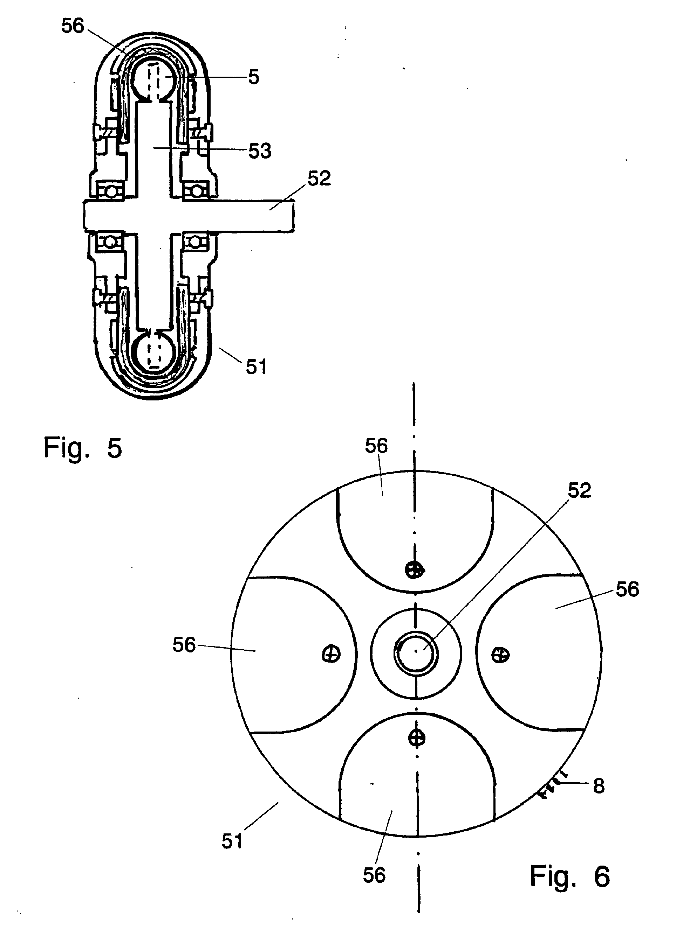

Bei der Darstellung nach den Figuren 5 und 6 trägt die Welle 52 der Maschine 51 einen im Durchmesser größeren Rotor 53, an dem die Dauermagnete 5 unmittelbar befestigt sind. Da dabei die Dauermagnete nur schwierig zu montieren bzw. demontieren sind, erhalten die Spulen 56 eine im Querschnitt U-förmige Gestalt. Die Spulen 56 sind dabei nach dem Entfernen von entsprechenden Abdeckungen des Statorgehäuses leicht zu demontieren. Zum Überprüfen sind auch hierbei die Spulenanschlüsse 8 herausgeführt.

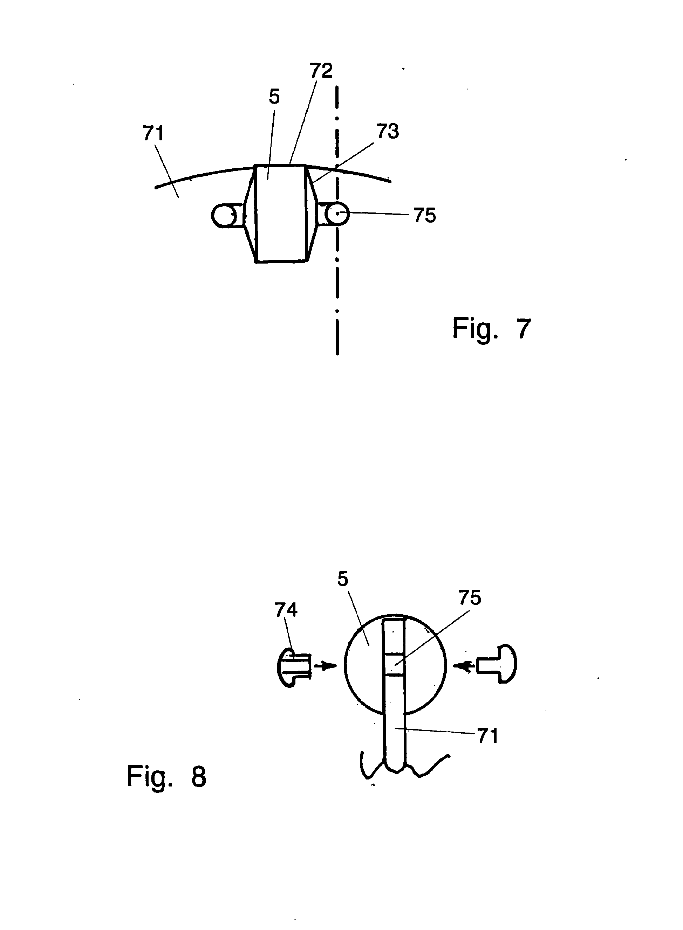

Fig. 7 zeigt einen Rotor 71, der Ausnehmungen 72 aufweist, deren radiale Flanken 73 schwalbenschwanzförmig nach außen ausgebuchtet sind. In diese Ausnehmungen sind aus axialer Richtung Dauermagnete 5 eingesetzt, deren Form an die Form der Ausnehmungen 72 angepaßt ist. Die Dauermagnete 5 werden in axialer Richtung durch in Fig. 8 dargestellte Schrauben 74 befestigt, die in Bohrungen 75 eingreifen, die an den Stellen der größten Ausdehnung der Ausnehmungen 72 angeordnet sind. Durch die schwalbenschwanzförmige Verzahnung der Dauermagnete 5 mit dem Rotor 71 ist ein sicherer Halt der Dauermagnete 5 in radialer Richtung gegeben. Die in radialer Richtung beim Betrieb auftretenden Fliehkräfte an den Dauermagneten 5 werden auf diese Weise kompensiert. In axialer Richtung ist eine leichte Demontierbarkeit der Dauermagnete 5 gewünscht, weswegen diese nur durch zwei Schrauben 74 fixiert sind, wodurch die Magnete 5 auf einfache Art und Weise ausgetauscht werden können.

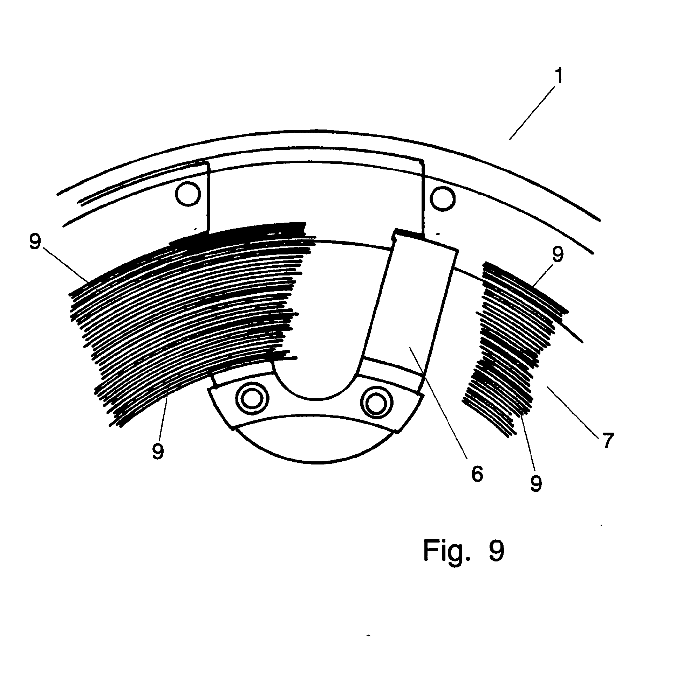

Um störende Einflüsse der in der Maschine 1 rotierenden Dauermagnete 5 auf die Umwelt zu minimieren, sind auf der Außenseite des Stators 7 und außerhalb der Spulen 6 konzentrische Ringe 9 aus isoliertem Draht vorgesehen, wie dies in Fig. 9 dargestellt ist. Die magnetischen Wechselfelder der rotierenden Dauermagnete 5 induzieren Ströme in den Ringen 9, die in Wärme umgesetzt werden.

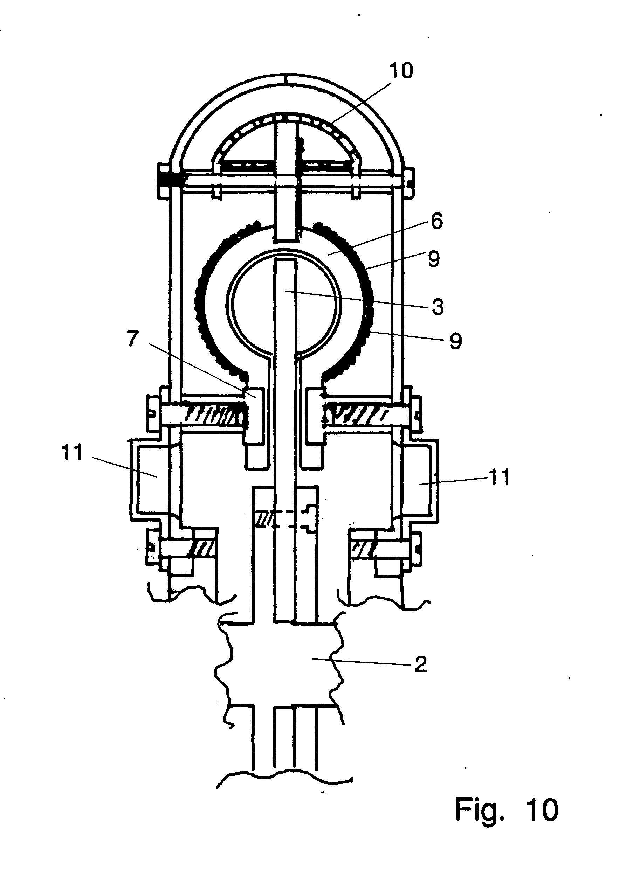

In Fig. 10 ist in radialer Richtung außerhalb des Stators 7 und des Rotors 3 ein Kabelträger 10 angeordnet, der für die Aufnahme der von den Spulen 6 weggeführten Anschlußleitungen 8 vorgesehen ist. Zudem sind in der Nähe der Achse 2 Zuluftöffnungen 11 angeordnet, durch die Kühlluft der Maschine 1 zugeführt wird. Diese Kühlluft wird durch die Drehbewegung des Rotors radial nach außen befördert, wodurch die gesamte Maschine 1 inklusive der Spulen 6, der Abschirmungsringe 9 und der Anschlußleitungen 8 gekühlt wird.

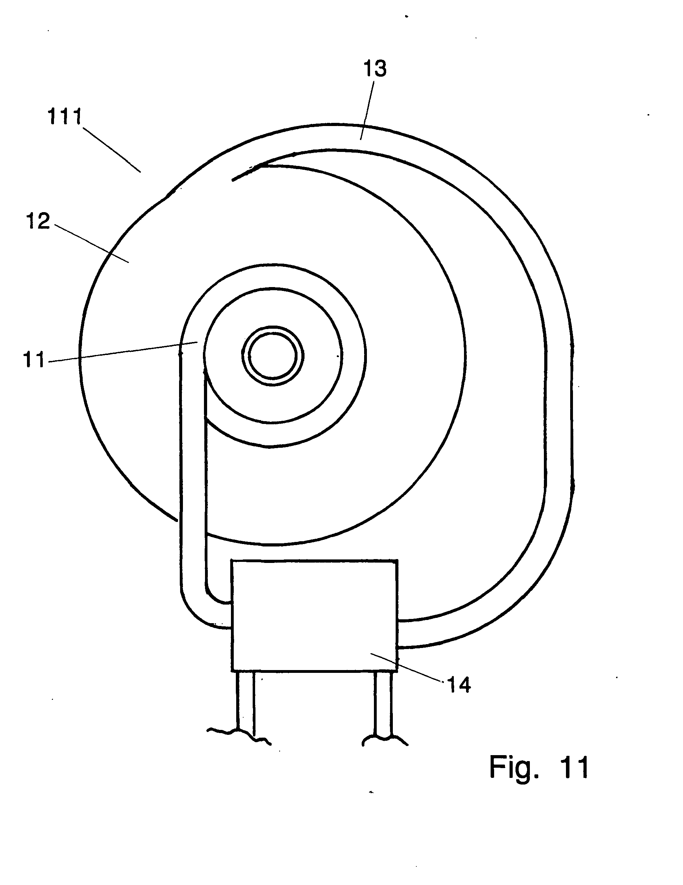

Die in Fig. 11 dargestellte Maschine 111 ist insgesamt von einem Gehäuse 12 umgeben. An der radial größten Ausdehnung des Gehäuses 12 ist eine Abluftführung 13 angeordnet, die über einen Wärmetauscher 14 zur Zuluftöffnung 11 führt. Die Maschine 111 wird dadurch von einem geschlossenen Luftkreislauf gekühlt, wodurch keinerlei Verunreinigungen in das innere des Maschinengehäuses 12 durch die Kühlung gelangen können. Diese Maschine 111 kann somit auch unter extremen Bedingungen zum Einsatz kommen. Die Abwärme wird vom Wärmetauseher 14 über ein nicht näher dargestelltes Leitungssystem mit einem gasförmigen oder flüssigen Medium abgeführt. Denkbar ist dabei auch die Möglichkeit im Wärmetauseher 14 die Verdunstungskälte eines Mediums auszunutzen. Weiterhin ist es möglich, zur Abführung der Abwärme der Maschine 111 einen Erdwärmetauscher 15 zu verwenden. Die Abwärme der Maschine 111 wird damit einem festen Medium wie zum Beispiel einer kühlen Erdschicht zugeführt.

Zur Filterung der Zuluft eines offenen Kühlluftsystems einer weiteren Maschine 131 sind an den Zuluftöffnungen 11 des Gehäuses 12 Filter 16 vorgesehen, die für die Maschine 131 schädliche Partikel ausfiltern. Die Filter 16 bestehen im wesentlichen aus zwei metallischen Feinsieben 17 und 18, welche jeweils mit einem Pol eines Permanentmagneten 19 verbunden sind. Durch den Magnetismus des Permanentmagneten 19 werden magnetische Teilchen, die aufgrund ihrer kleineren Größe als die Größe der Maschen der Feinsiebe 17 und 18 diese passieren könnten, magnetisch an den Feinsieben 17 und 18 festgehalten. Die Feinsiebe 17 und 18 sind vom Permanentmagneten. 19 trennbar ausgestaltet, wodurch diese auf einfache Art und Weise von den angelagerten magnetischen Teilchen gereinigt werden können.

## Patentansprüche

1. Elektrische Maschine mit einem Rotor (3,53) und einem Stator (7,57), in welchen elektrische Spulen (6,56) bzw. Dauermagnete (5) angeordnet sind, die sich bei der Drehbewegung des Rotors gegenseitig beeinflussen, wobei der Rotor (3,53) die Magnete (5) und der Stator die Spulen (6,56) enthält und die Spulen (6,56) ohne Eisenkern ausgebildet sind und sich wenigstens ein Abschnitt der Spulen quer über den Rotorumfang erstreckt, wobei die Spulen (6,56) einzeln in den Stator (7,57) eingesetzt sind und derart abgebogen sind, daß sie sich an beiden Seiten des Rotors (3,53) erstrecken und die im Rotor angeordneten Magnete (5) weitgehend umfassen, **dadurch gekennzeichnet, daß** die Dauermagnete (5) über Tragelemente (4) am Rotor (3) befestigt sind und daß die Tragelemente (4) für die Magnete (5) auswechselbar am Rotor (3) befestigt sind.

2. Elektrische Maschine nach Anspruch 1, **dadurch gekennzeichnet, daß** die Magnete (5) zylinderförmig ausgebildet sind und wenigstens annähernd tangential am Umfang des Rotors (3,53) angeordnet sind.

3. Elektrische Maschine nach einem der vorhergehenden Ansprüche, **dadurch gekennzeichnet, daß** die Spulen (6) im Querschnitt Ω-förmig ausgebildet sind und die Magnete (5) bis unmittelbar an die Spuleninnenseite heranreichen.

4. Elektrische Maschine nach einem der vorhergehenden Ansprüche, **dadurch gekennzeichnet, daß** zwischen den Tragelementen (4) und Rotor (3) vorzugsweise in radialer Richtung eine Verzahnung (73) vorgesehen ist.

5. Elektrische Maschine nach einem der vorhergehenden Ansprüche, **dadurch gekennzeichnet, daß** die Tragelemente (4) in axialer Richtung lösbar am Rotor (3) befestigt sind.

6. Elektrische Maschine nach einem der vorhergehenden Ansprüche, **dadurch gekennzeichnet, daß** die Anschlüsse (8) der Spulen (6,56) einzeln am Stator (7,57) zugänglich angeordnet sind.

7. Elektrische Maschine nach einem der vorhergehenden Ansprüche, **dadurch gekennzeichnet, daß** die hintereinander liegenden Magnete (5) jeweils mit unterschiedlicher Polung aufeinander folgen.

8. Elektrische Maschine nach einem der vorhergehenden Ansprüche, **dadurch gekennzeichnet, daß** in der Zuleitung zu den Spulen (6,56) eine Umpoleinrichtung vorgesehen ist.

9. Elektrische Maschine nach einem der vorhergehenden Ansprüche, **dadurch gekennzeichnet, daß** die Spule (6,56) ringförmig ausgebildet ist und Rotor (3,5,53) und Spule in ihrer Kontur aneinander angepaßt sind.

10. Elektrische Maschine nach einem der vorhergehenden Ansprüche, **dadurch gekennzeichnet, daß** mehrere Rotoren (3,53) und Spulen-Anordnungen in axialer Richtung der Maschine hintereinander angeordnet sind.

11. Elektrische Maschine nach einem der vorhergehenden Ansprüche, **dadurch gekennzeichnet, daß** auf einer gemeinsamen Maschinenwelle (2,52) hintereinander wenigstens zwei vorzugsweise als Motoren ausgebildete Maschinen angeordnet sind, die unterschiedliche Durchmesser aufweisen.

12. Elektrische Maschine nach einem der vorangehenden Ansprüche, **dadurch gekennzeichnet, daß** die Spulen (6) aus mehreren, in ihrer Dicke nur jeweils eine Drahtlage aufweisenden Spulen gebildet werden.

13. Elektrische Maschine nach Anspruch 12, **dadurch gekennzeichnet, daß** die Anschlüsse der einzelnen Spulen einzeln herausgeführt und insbesondere in Reihe und/oder parallel miteinander verschaltbar ausgebildet sind.

14. Elektrische Maschine nach Anspruch 12 oder 13, **dadurch gekennzeichnet, daß** die einzelnen Spulenlagen insbesondere mit einem gut Wärme leitenden Klebstoff miteinander verklebt sind.

15. Elektrische Maschine nach einem der vorangehenden Ansprüche, **dadurch gekennzeichnet, daß** ein Kabelträger (10) am Umfang der Rotor-Stator-Anordnung vorgesehen ist.

## Claims

1. An electric machine comprising a rotor (3, 53) and a stator (7, 57), wherein electrical coils (6, 56) and permanent magnets (5) are arranged which mutually influence one another during rotary movement of the rotor, said rotor (3, 53) containing the magnets (5) and said stator containing the coils (6, 56), said coils (6, 56) being configured without an iron core and at least one section of the coils extending crosswise over the periphery of the rotor, the coils (6, 56) being inserted individually into the stator (7, 57) and being bent in such a way that they extend on both sides of the rotor (3, 53) and largely encompass the magnets (5) located in the rotor, **characterised in that** the permanent magnets (5) are attached to the rotor (3) via support elements (4) and that the support elements (4) for the magnets (5) are attached exchangeably to the rotor (3).

2. An electric machine according to claim 1, **characterised in that** the magnets (5) are cylindrical in shape and are arranged at least approximately tangentially at the periphery of the rotor (3, 53).

3. An electric machine according to one of the preceding claims, **characterised in that** the coils (6) are configured with an Ω-shaped cross-section and the magnets (5) extend to the immediate vicinity of the interior of the coils.

4. An electric machine according to one of the preceding claims, **characterised in that** a toothing (73) is provided between the support elements (4) and the rotor (3), preferably in the radial direction.

5. An electric machine according to one of the preceding claims, **characterised in that** the support elements (4) are attached to the rotor (3) in axially detachable manner.

6. An electric machine according to one of the preceding claims, **characterised in that** the connections (8) for the coils (6, 56) are arranged on the stator (7, 57) such as to be individually accessible.

7. An electric machine according to one of the preceding claims, **characterised in that** each successive magnet (5) is poled oppositely with respect to the following magnet.

8. An electric machine according to one of the preceding claims, **characterised in that** a polarity reversal means is provided in the supply lead to the coils (6, 56).

9. An electric machine according to one of the preceding claims, **characterised in that** the coil (6, 56) is of annular configuration and that rotor (3, 5, 53) and coil have matching shapes.

10. An electric machine according to one of the preceding claims, **characterised in that** a plurality of rotors (3, 53) and coil assemblies are successively arranged in the machine's axial direction.

11. An electric machine according to one of the preceding claims, **characterised in that** at least two machines of different diameter, which are preferably configured as electric motors, are located one behind the other on a common machine shaft (2, 52).

12. An electric machine according to one of the preceding claims, **characterised in that** the coils (6) are made up of a plurality of coils, each of which is only a single layer of wire thick.

13. An electric machine according to claim 12, **characterised in that** the connections for the individual coils lead out individually and are configured such that they can be connected up with each other, in particular in series and/or in parallel.

14. An electric machine according to claim 12 or 13, **characterised in that** the individual coil layers are bonded to each other, in particular with an adhesive that conducts heat well.

15. An electric machine according to one of the preceding claims, **characterised in that** a cable bearer (10) is provided at the periphery of the rotor-stator assembly.

## Revendications

1. Machine électrique avec un rotor (3, 53) et un stator (7, 57) à l'intérieur desquels sont disposés des bobines électriques (6, 56) ou des aimants permanents (5) qui interagissent entre eux lors du mouvement de rotation du rotor, le rotor (3, 53) portant les aimants (5) et le stator les bobines (6, 56) et les bobines (6, 56) étant formées sans noyau de fer et au moins une partie des bobines s'étendant transversalement sur de la circonférence du rotor, les bobines (6, 56) étant placées séparées dans le stator (7, 57) et cintrées de telle sorte qu'elles s'étendent des deux côtés du rotor (3, 53) et entoure pratiquement entièrement les aimants (5) placés sur le rotor, **caractérisée en ce que** les aimants permanents (5) sont fixés au rotor (3) par des éléments porteurs (4) et **en ce que** les éléments porteurs (4) pour les aimants (5) sont fixés sur le rotor (3) de façon à pouvoir être échangés.

2. Machine électrique selon la revendication 1, **caractérisée en ce que** les aimants (5) sont de forme cylindrique et sont disposés au moins sensiblement de façon tangentielle à la circonférence du rotor (3, 53).

3. Machine électrique selon l'une des revendications précédentes, **caractérisée en ce que** les bobines (6) ont une section transversale en forme de Ω et **en ce que** les aimants (5) s'étendent jusqu'à la face intérieure des bobines.

4. Machine électrique selon l'une des revendications précédentes, **caractérisée en ce qu**'il est prévu entre les éléments porteurs (4) et le rotor (3) un assemblage en adent (73), de préférence en direction radiale.

5. Machine électrique selon l'une des revendications précédentes, **caractérisée en ce que** les éléments porteurs (4) sont fixés au rotor (3) en direction axiale de façon démontable.

6. Machine électrique selon l'une des revendications précédentes, **caractérisée en ce que** les raccords (8) des bobines (6, 56) sont disposés séparés sur le stator (7, 57) de façon a être accessible.

7. Machine électrique selon l'une des revendications précédentes, **caractérisée en ce que** les aimants (5) disposés les uns derrières les autres se succèdent avec un pôle différent.

8. Machine électrique selon l'une des revendications précédentes, **caractérisée en ce qu**'il est prévu dans la conduite d'alimentation des bobines (6, 56) un dispositif d'inversion des pôles.

9. Machine électrique selon l'une des revendications précédentes, **caractérisée en ce que** la bobine (6, 56) est de forme annulaire et **en ce que** le contour du rotor (3, 5, 53) et celui de la bobine sont ajustés l'un à l'autre.

10. Machine électrique selon l'une des revendications précédentes, **caractérisée en ce que** plusieurs rotors (3, 53) et plusieurs assemblages de bobines sont disposés les uns derrière les autres en direction axiale de la machine.

11. Machine électrique selon l'une des revendications précédentes, **caractérisée en ce qu**'au moins deux machines de diamètre différent, conçues de préférence comme moteurs, sont disposées l'une derrière l'autre sur un même arbre de machine (2, 52).

12. Machine électrique selon l'une des revendications précédentes, **caractérisée en ce que** les bobines (6) sont formées de plusieurs bobines ne présentant chacune dans leur épaisseur qu'une couche de fil.

13. Machine électrique selon la revendication 12, **caractérisée en ce que** les raccords des différentes bobines sortent séparément et sont conçues pour pouvoir être entrelacés ensemble notamment en série et/ou en parallèle.

14. Machine électrique selon la revendication 12 ou 13, **caractérisée en ce que** les différentes couches de bobinage sont collées les unes aux autres, notamment avec une colle conduisant bien la chaleur.

15. Machine électrique selon l'une des revendications précédentes, **caractérisée en ce qu**'un porte-câbles (10) est prévu à la circonférence de l'assemblage rotor-stator.
